# EUROPÄISCHE PATENTSCHRIFT

(11) **EP 4 347 457 B1**
(45) Veröffentlichungstag und Bekanntmachung des Hinweises auf die Patenterteilung: **24.06.2026**
(21) Anmeldenummer: 22726043.7
(22) Anmeldetag: 27.04.2022
(51) Int. Cl.: B65G 59/02, B65G 59/04

(54) **GREIFVORRICHTUNG SOWIE EINE DIE GREIFVORRICHTUNG AUFWEISENDE MANIPULATOREINHEIT**
GRIPPING DEVICE AND A MANIPULATOR UNIT COMPRISING THE GRIPPING DEVICE
DISPOSITIF DE PRÉHENSION AINSI QU'UNE UNITÉ DE MANIPULATION COMPRENANT LE DISPOSITIF DE PRÉHENSION

(30) Priorität: 26.05.2021 DE 102021113583
(43) Veröffentlichungstag der Anmeldung: 10.04.2024
(73) Patentinhaber: Premium Robotics GmbH, 70771 Leinfelden-Echterdingen (DE)
(72) Erfinder: LECKEL, Tim, 70771 Leinfelden-Echterdingen (DE); DIEL, Kai, 70771 Leinfelden-Echterdingen (DE)
(74) Vertreter: Rösler, Uwe
(86) Internationale Anmeldenummer: PCT/EP2022/061210
(87) Internationale Veröffentlichungsnummer: WO 2022/248150

(56) Entgegenhaltungen:
- EP-A1- 3 623 114
- DE-A1- 102007 054 867
- US-A1- 2020 180 875
- US-B2- 10 351 362
- US-B2- 10 457 490

## Beschreibung

### Technisches Gebiet

Beschrieben werden eine Greifvorrichtung sowie eine die Greifvorrichtung aufweisende Manipulatoreinheit. Die Greifvorrichtung weist wenigstens einen Aufwälzgreifer sowie eine Sauggreifereinheit zum Kommissionieren von Gebinden auf.

Ein großes Problem in der Intralogistik beim automatisierten Kommissionieren von Gebinden, umfassend auch deren Depalettieren und Umpalettieren, ist es, die große Varianz der zu handhabenden Gebinde mit einem universellen Greifer zu bewältigen. Vor allem die Vielfalt an Formen, Größen und Gewichten von Gebinden ist hierbei eine große Herausforderung.

### Stand der Technik

Sofern ein Gebinde nicht mit Saug- oder Klemmgreifern handhabbar bzw. greifbar ist, weil beispielsweise keine geschlossene Fläche für die Sauger oder Klemmbacken vorhanden ist oder das Gebinde in einem Stapelverbund nicht zum Klemmen zugänglich ist, bietet sich der Einsatz von Aufwälzgreifern an. Aufwälzgreifer sind in den unterschiedlichsten Ausführungsformen bekannt, beispielsweise in Form eines einzigen Aufnahmemoduls mit wenigstens einem über zwei Rollen umlaufenden Förderband gemäß der Druckschrift GB 1 559 973 A, oder mit zwei parallel zueinander orientierten Aufwälzgreifermodulen, deren Querabstand variabel einstellbar ist, gemäß der Druckschrift DE 10 2012 009 649 B4, um nur einige zu nennen.

Grundsätzlich wird beim Aufwälzprinzip ein rotierendes Wälzelement mit einer definierten horizontalen Kraft gegen das aufzunehmende Objekt bzw. Gebinde gedrückt. Aufgrund der Reibung zwischen Wälzelement und dem Gebinde entsteht eine vertikal nach oben gerichtete Kraft, die das Gebinde entweder um die Kippachse des Gebindes ankippt oder an dahinter stehenden Gebinden entlang nach oben schiebt. Die entstehende vertikale Kraft ist linear von der Kraft, mit der das Wälzelement horizontal gegen das Gebinde gedrückt wird, und dem Reibungskoeffizienten der Wälzelemente abhängig. Der Reibungskoeffizient des Wälzelementes ist allerdings begrenzt. Zusätzlich ermöglichen es die Eigenschaften des Gebindes oftmals nicht das Wälzelement mit der entsprechenden Kraft horizontal gegen das Gebinde zu drücken, um die benötigte Vertikalkraft zum Anheben des Gebindes zu erzeugen, ohne das Gebinde dabei einzudrücken oder zu beschädigen.

In der Druckschrift DE 10 2007 054 867 A1 ist eine Greifvorrichtung beschrieben, die neben einem Aufwälzgreifer zusätzlich ein Saugmodul zum Anheben eines aufzunehmenden Gebindes vorsieht, während der Aufwälzgreifer zur Aufnahme des Gebindes zumindest bereichsweise unter dieses verfährt.

Die Druckschrift DE 44 27 488 A1 offenbart einen Stückgutgreifer mit einem U-förmigen Aufbau, bei dem ein Gebinde mittels eines Sauggreifers auf eine Trageinheit überführbar.

Die Druckschrift EP 3 020 515 A1 offenbart eine Greifereinheit mit einem Aufwälzgreifer, der mit einem Sauggreifer zusammenwirkt. Beide Greifer sind getrennt und unabhängig voneinander einer vertikalen Tragstruktur beweglich angeordnet.

Die Druckschrift DE 10 2013 005 613 A1 beschreibt einen Greiferkopf mit einem Ansaugstutzen sowie mit einem längsverfahrbaren Tragelement, das unter ein aufzunehmendes Gebinde ausgefahren wird, während das Gebinde mit dem Ansaugstutzen vom Greiferkopf ergriffen ist.

### Darstellung der Erfindung

Ausgehend von dem durch die vorstehende Druckschrift DE 10 2007 054 867 A1 beschriebenen nächstkommenden Stand der Technik liegt der Erfindung die Aufgabe zugrunde, eine Greifvorrichtung mit wenigstens einem Aufwälzgreifer sowie einer Sauggreifereinheit zum Kommissionieren von Gebinden derart weiterzubilden, dass die Greifvorrichtung möglichst robust und kompakt ausgestaltet und überdies universell einsetzbar sein soll. Die Greifvorrichtung soll zudem zur räumlichen Positionierung und Lageausrichtung an einen Manipulator, bspw. an eine Robotereinheit o.ä., anflanschbar sein und eine schonende und sichere Kommissionierung von Gebinden gewährleisten.

Die Lösung der der Erfindung zugrunde liegenden Aufgabe ist im Anspruch 1 angegeben. Gegenstand des Anspruches 17 ist eine lösungsgemäße Manipulatoreinheit mit einer Greifvorrichtung. Den Erfindungsgedanken in vorteilhafter Weise ausbildende Merkmale sind Gegenstand der Unteransprüche sowie der weiteren Beschreibung, insbesondere unter Bezugnahme auf die Ausführungsbeispiele zu entnehmen.

Die lösungsgemäße Greifvorrichtung mit wenigstens einem Aufwälzgreifer sowie einer Sauggreifereinheit zum Kommissionieren von Gebinden zeichnet sich dadurch aus, dass der wenigstens eine Aufwälzgreifer Teil einer C- oder U-förmig ausgebildeten Tragstruktur ist, die zwei sich beabstandet gegenüberliegende Längsabschnitte vorsieht, die jeweils endseitig frei enden und gegenüberliegend zu den freien Enden über einen Verbindungsabschnitt miteinander verbunden sind.

Einer der beiden Längsabschnitte entspricht dem wenigstens einen Aufwälzgreifer, an dessen freien Ende wenigstens ein drehbar angetriebenes Wälzelement vorgesehen ist. Die Sauggreifereinheit, die wenigstens einen Sauggreifer vorsieht, ist an der Tragstruktur angelenkt und aus einer ersten Position, der sogenannten Arbeitsposition, in der der Sauggreifer zur Aufnahme eines Gebindes auf den Aufwälzgreifer vertikal über dem Wälzelement angeordnet ist, in eine zweite Position, die sogenannten Transportposition, überführbar, in der der Sauggreifer gegenüberliegend zum Aufwälzgreifer längs verlaufend oder weitgehend längsverlaufend zum Längsabschnitt oder gegenüberliegend zu beiden freien Enden längs verlaufend oder weitgehend längsverlaufend zum Verbindungsabschnitt angeordnet ist. Somit befindet sich der wenigstens Sauggreifer in der Transportposition in einer für die Aufnahme und Lagerung wenigstens eines Gebindes auf dem Aufwälzgreifer nicht störenden Stellung bzw. Position innerhalb eines durch die C- oder U-förmig ausgebildete Struktur umfassten Raumbereiches. Schließlich ist der wenigstens eine Sauggreifer der Sauggreifereinheit mittel- oder unmittelbar mit einer Linearkinematik verbunden, die den wenigstens einen Sauggreifer innerhalb der Arbeitsposition vertikal bidirektional auszulenken vermag.

In einer bevorzugten Ausführungsform ist der wenigstens eine Sauggreifer an einer Halterung angebracht, die im einfachsten Fall als Linearstrebe ausgebildet ist, die mit einem ihrer beiden Strebenenden am freien Ende des dem Aufwälzgreifer gegenüberliegenden Längsabschnittes um eine Drehachse mittels eines Drehantriebs schwenkbar angeordnet ist. Längs der Halterung ist zur bidirektionalen Auslenkung des wenigstens einen Sauggreifers die Linearkinematik angeordnet, die als pneumatische oder hydraulische Linearkolbenanordnung oder in Form eines elektromotorisch angetriebenen Spindelgetriebes ausgebildet sein kann.

Mit Hilfe des am freien Ende der Längsachse angebrachten Drehantriebs, vorzugsweise in Form eines elektromotorischen oder pneumatischen Drehantriebes, lässt sich die Halterung samt des an ihr über die Linearkinematik angeordneten wenigstens einen Sauggreifers zwischen beiden vorstehend erläuterten Positionen bedarfsgerecht verschwenken.

Alternativ ist die Halterung längs des dem Aufwälzgreifer gegenüberliegenden Längsabschnittes mittels eines weiteren Linearantriebes bidirektional verfahrbar angeordnet, d.h. in der Arbeitsposition befindet sich die Halterung samt Linearkinematik und Sauggreifer vertikal oberhalb des Wälzelementes des Aufwälzgreifers und in der Transportposition in Aufwälzrichtung hinter dem Aufwälzgreifer möglichst raumnah und parallel zum Verbindungsabschnitt der Tragstruktur.

Alternativ zur längsbeweglichen Anbringung der Halterung an dem, dem Aufwälzgreifer gegenüberliegenden Längsabschnitt, ist die Halterung an ihrem freien Ende des dem Aufwälzgreifer gegenüberliegenden Längsabschnittes fest, d.h. nicht schwenkbar, angeordnet, wobei der gesamte Längsabschnitt mittels eines Antriebes relativ zum Verbindungsabschnitt der Tragstruktur bidirektional auslenkbar gelagert ist. Auch in diesem Fall lässt sich die Halterung samt Sauggreifer in der Transportposition in Aufwälzrichtung vollständig hinter den Aufwälzgreifer verfahren.

Alternativ zu den vorstehend erläuterten Ausbildungen der Greifvorrichtung, bei denen die Linearkinematik zur bidirektionalen Auslenkung des wenigstens einen Sauggreifers längs der Halterung angeordnet ist, ist es gleichsam möglich, die Linearkinematik längs des Verbindungsabschnittes der Tragstruktur anzuordnen und auf diese Weise den Abstand zwischen Aufwälzgreifer und dem diesen gegenüberliegenden Längsabschnitt der Tragstruktur bedarfsgerecht kontrolliert zu verändern.

Auch sieht einer weitere Ausführungsform der Greifvorrichtung wenigstens eine zu dem, dem Aufwälzgreifer gegenüberliegenden Längsabschnitt querverlaufende Tragstrebe vor, die vorzugsweise mit dem Längsabschnitt fest oder längs diesem verfahrbar verbunden ist, längs der die Halterung samt des zumindest einen Sauggreifers bidirektional auslenkbar gelagert ist. Dies eröffnet die Möglichkeit den wenigstens einen Sauggreifer quer zum Längsabschnitt zu verfahren, um außermittig an einem Gebinde anzugreifen. Das bedeutet die vorstehend erwähnte Drehachse oder Linearkinematik sind auf einer quer zum Längsabschnitt angeordneten Linearkinematik angebracht.

Die lösungsgemäß ausgebildete Greifvorrichtung zeichnet sich insbesondere durch ihre C- oder U-förmig ausgebildete Tragstruktur aus, die aufgrund ihrer kompakten Bauform in besonderer Weise dazu geeignet ist, als räumlich frei positionierbares Greifmodul in Kombination mit einer Manipulatoreinheit eingesetzt zu werden. Hierzu sieht die Tragstruktur, vorzugsweise im Bereich ihres Verbindungsabschnittes, rückseitig zum Aufwälzgreifer wenigstens einen mechanisch robusten und energetischen Verbindungsflansch zur Anbringung an eine Manipulatoranordnung, vorzugsweise einer Robotereinheit, vor.

Die lösungsgemäße Greifvorrichtung lässt sich durch Kombination mit weiteren mittel- oder unmittelbar an der Tragstruktur anbringbaren technischen Komponenten in vorteilhafter Weise erweitern, um die Funktionalität der Greifvorrichtung zum Zwecke einer sicheren und vielseitigen Kommissionierung von Gebinden unterschiedlicher Form und Größe sowie weiteren Objekten, wie bspw. Palletten, zu ermöglichen. Zur weiteren Erläuterung der Ausgestaltungsmöglichkeiten der lösungsgemäßen Greifvorrichtung sei auf die weitere Beschreibung unter Bezugnahme auf die folgenden illustrierten Ausführungsbeispiele verwiesen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Greifvorrichtung mit schwenkbarer Halterung und Sauggreifer,
- Fig. 2a, b: Illustration des Aufwälzprozesses unterstützt durch eine vertikale Sauggreiferbewegung,
- Fig. 3a, b: alternative Ausgestaltung einer lösungsgemäßen Greifvorrichtung,
- Fig. 4a-f: Vielseitenansicht einer multifunktional ausgebildeten Sauggreifereinheit,
- Fig. 5a, b: Sauggreifereinheit mit zusätzlicher Schwenkfunktion,
- Fig. 6a-d: Sequenzbilddarstellungen zur Aufnahme kritischer bzw. kippanfälliger Gebinde,
- Fig. 7a, b: Illustration einer Stabilisierung von auf einem Aufwälzgreifer aufgenommenen Gebinden,
- Fig. 8a, b: Greifvorrichtung mit zusätzlich an der Tragstruktur angebrachten Sauggreifern,
- Fig. 9a-f: Greifvorrichtung mit zusätzlichem Greifmittel zur Handhabung einer Palette, und
- Fig. 10a, b: Greifvorrichtung mit Zentriereinheit.

### Wege zur Ausführung der Erfindung, gewerbliche Verwendbarkeit

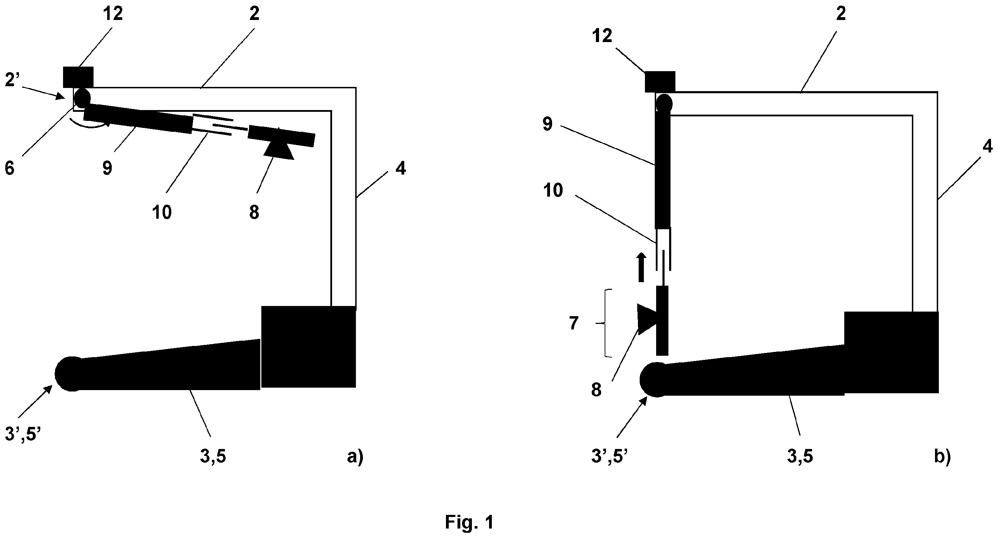

In Figur 1 ist eine schematisierte Seitenansicht einer lösungsgemäß ausgebildeten Greifvorrichtung illustriert, die eine U- bzw. C-förmig ausgebildete Tragstruktur 1 besitzt, die zwei sich beabstandet gegenüberliegende Längsabschnitte 2, 3 vorsieht, die jeweils einseitig frei enden und gegenüberliegend zu ihren freien Enden 2', 3' über einen Verbindungsabschnitt 4 miteinander verbunden sind. Der in der Darstellung gemäß Figur 1a untere Längsabschnitt 3 weist wenigstens einen Aufwälzgreifer 5 auf bzw. ist in Form wenigstens eines Aufwälzgreifers 5 ausgebildet.

Der Aufwälzgreifer 5 ist in an sich bekannter Weise ausgebildet und verfügt an seinem vorderen freien Ende 3' über ein motorisch angetriebenes Wälzelement 5', an das sich üblicherweise ein ebenfalls angetriebenes, umlaufendes Förderband zum Aufnehmenden bzw. Abgeben eines Gebindes anschließt. Selbstverständlich eignet sich grundsätzlich jede bekannte konstruktive Auslegung eines Aufwälzgreifers als integrale Komponente der lösungsgemäß ausgebildeten Greifvorrichtung.

An dem oberen freien Ende 2' des Längsabschnittes 2 ist um eine Drehachse 6 eine Sauggreifereinheit 7, die im dargestellten Fall einen Sauggreifer 8 aufweist, schwenkbar gelagert. Die Schwenkbewegung der Sauggreifereinheit 7 um die Drehachse 6 erfolgt kontrolliert mit Hilfe eines elektromotorischen oder pneumatischen Antriebes (nicht dargestellt), vermittels dem die Sauggreifereinheit 7 aus einer in Figur 1a dargestellten Transportposition, in der die Sauggreifereinheit 7 weitgehend längs verlaufend zum oberen Längsabschnitt 2 der Tragstruktur 1 angeordnet ist, in die in Figur 1b illustrierte Arbeitsposition überführbar ist, in der die Sauggreifereinheit 7 bzw. der wenigstens eine Sauggreifer 8 vertikal oberhalb des Wälzelementes 5' des Aufwälzgreifers 5 angeordnet ist.

Die Sauggreifereinheit 7 ist über eine Halterung 9 drehbar um die Drehachse 6 am freien Ende 2' des Längsabschnittes 2 verbunden. Die Halterung 9, die im einfachsten Fall als lineare Verbindungsstrebe ausgebildet ist, jedoch in Abhängigkeit von Stabilitäts- und Traglastanforderungen als flächige Stützstruktur gewählt sein kann, ist zudem Träger einer Linearkinematik 10, vermittels der die Sauggreifereinheit 7 bidirektional auslenkbar ist. Im Falle der in Figur 1b illustrierten Arbeitsposition kann der wenigstens eine Sauggreifer 8 kontrolliert vertikal nach oben angehoben bzw. nach unten in Richtung des Wälzelementes des Aufwälzgreifers 5 abgesenkt werden.

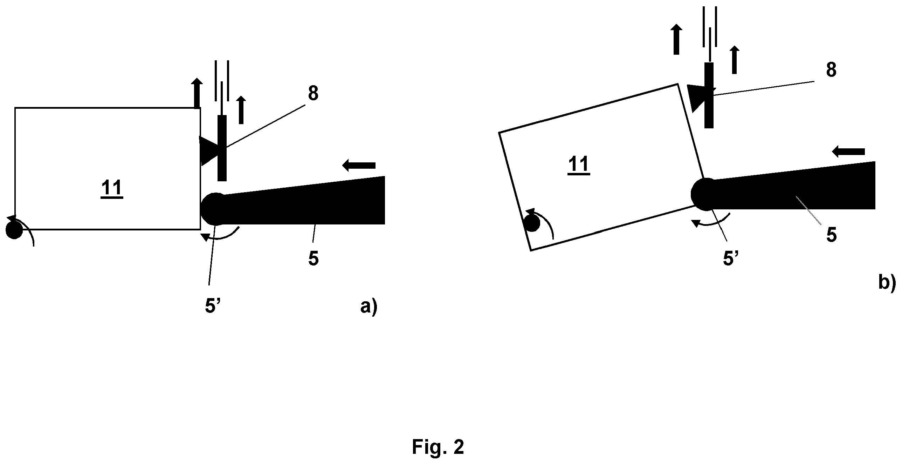

In der in Figur 1b illustrierten, sogenannten Aufnahme- bzw. Arbeitsposition wird die Greifvorrichtung 1 zur Kontaktierung und Aufnahme eines Gebindes 11 in eine in Figur 2a illustrierte Position verfahren. Üblicherweise befinden sich die Gebinde 11 lagenförmig auf einer stationären Palettenanordnung, so dass die Greifvorrichtung vermittels einer Manipulatoreinheit in Form eines Roboters verfahren wird. In der in Figur 2a illustrierten Situation greift der wenigstens eine Sauggreifer 8 an einer freien Stelle eines aufzunehmenden Gebindes 11 an.

Der Annäherungsvorgang der Greifvorrichtung 1 relativ zu einem Gebinde 11 sowie auch die Unterdruck-getriebene Anhaftung des wenigstens einen Sauggreifers 8 an einer frei zugänglichen Seitenwand des Gebindes 11 werden vorzugsweise mittels einer Kontaktsensorik 12 erfasst und überwacht, die beispielsweise längs der Halterung 9 oder an einer geeigneten Stelle an der Tragstruktur 1, vorzugsweise im Bereich des freien Endes 2' des Längsabschnittes 2 angeordnet ist, siehe Figur 1a.

Ausgehend von der in Figur 2a illustrierten Situation, in der der Aufwälzgreifer 5 mit seinem Wälzelement 5' in Reibkontakt mit der Vorderseite eines aufzunehmenden Gebindes 11 tritt, bewegt sich der Sauggreifer 8 vermittels der an der Halterung 9 angebrachten Linearkinematik 10 vertikal nach oben, wodurch das Gebinde 11 wenigstens einseitig angehoben und über dessen hintere Kippachse 13 angekippt wird. Im gleichen Moment fährt der Aufwälzgreifer 5 unter die vertikal nach oben gehobene Kante des Gebindes 11, das infolge der Rotationsbewegung des Wälzelementes 5' auf die Oberfläche des Aufwälzgreifers 5 gezogen wird. Der Sauggreifer 8 kontaktiert das Gebinde 11 Unterdruck-getrieben nur so lange, bis das Gebinde 11 im weiteren Verlauf der Handhabung allein durch den Aufwälzgreifer 5 handhabbar ist. Unmittelbar darauffolgend wird der Sauggreifer 8 in die in Figur 1a illustrierte obere Position geschwenkt, in der der komplette Arbeitsraum oberhalb des Aufwälzgreifers 5 frei zugänglich ist.

Die lösungsgemäße Greifvorrichtung bildet, wie in Figur 1a illustriert, in der Transportposition eine in der Seitendarstellung charakteristische C- bzw. U-Form, die zum Zwecke einer Hubkraft-unterstützten Gebindeaufnahme mittels des Aufwälzgreifers kurzzeitig in eine geschlossene O-Form, durch Anordnen der Sauggreifereinheit 7 vertikal oberhalb des Wälzelementes 5' des Aufwälzgreifers 5 überführbar ist, siehe Figur 1b.

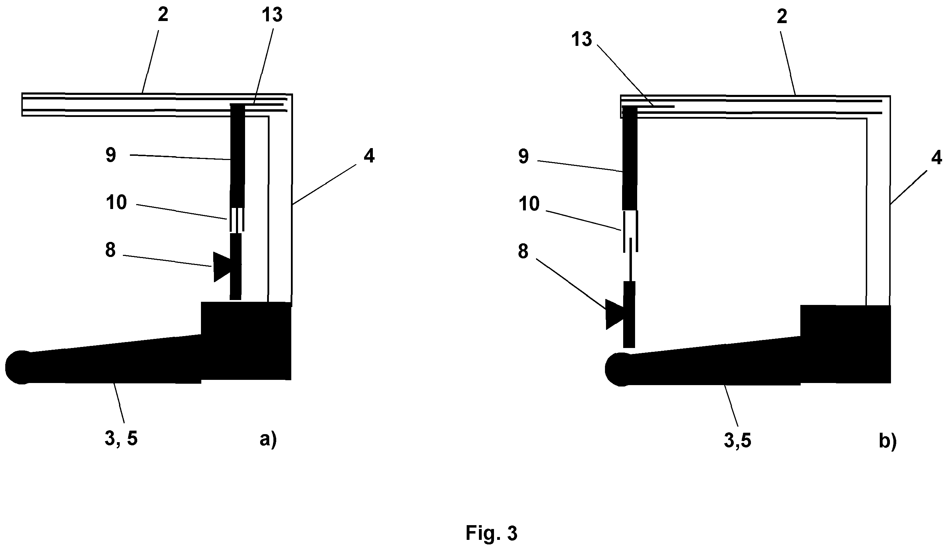

Eine weitere Möglichkeit zur Überführung der Greifvorrichtung zwischen der Transportposition (C- bzw. U-Form) in die Arbeitsposition (O-Form) ist in den Figuren 3a, b illustriert. In diesem Fall ist die Halterung 9, nicht wie in den Figuren 1a, b drehbar um die Drehachse 6 am freien Ende 2' des Längsabschnittes 2 angelenkt, sondern längs des Längsabschnittes 2 über eine Linearführung bzw. Linearkinematik 14 bidirektional auslenkbar geführt. In Figur 3a befindet sich die Halterung 9 samt des wenigstens einen Sauggreifers 8 und der diesem bidirektional vertikal verfahrbaren Linearkinematik 10 in einer hinteren Position, möglichst nahe des Verbindungsabschnittes 4 der Tragstruktur, so dass der gesamte Arbeitsraum über dem Aufwälzgreifer 5 uneingeschränkt zugänglich ist. Aus der in Figur 3a hinteren Position wird zum Zwecke der Gebindeaufnahme der wenigstens eine Sauggreifer 8 über die am Längsabschnitt 2 angebrachte pneumatisch oder elektromotorisch angetriebene Linearkinematik 14 in die Arbeitsposition zur Aufnahme eines Gebindes überführt.

Eine weitere alternative Ausgestaltungsform, die nicht dargestellt ist, sieht eine feste Anbringung der Halterung 9 am vorderen Ende 2' des Längsabschnittes 2 vor. Zur Überführung der Greifvorrichtung aus der Arbeitsposition (O-Form) in die Transportposition (C- bzw. U-Form) ist der gesamte Längsabschnitt 2 mit Hilfe einer Linearkinematik bidirektional bewegbar am Verbindungsabschnitt 4 der Tragstruktur 1 angelenkt.

Zur funktionellen Erweiterung der Greifvorrichtung können optional weitere, jeweils einseitig an der Tragstruktur 1 angebrachte Linearführungen, zur Auslenkung des wenigstens einen Sauggreifers 8 mittel- oder unmittelbar vorgesehen sein.

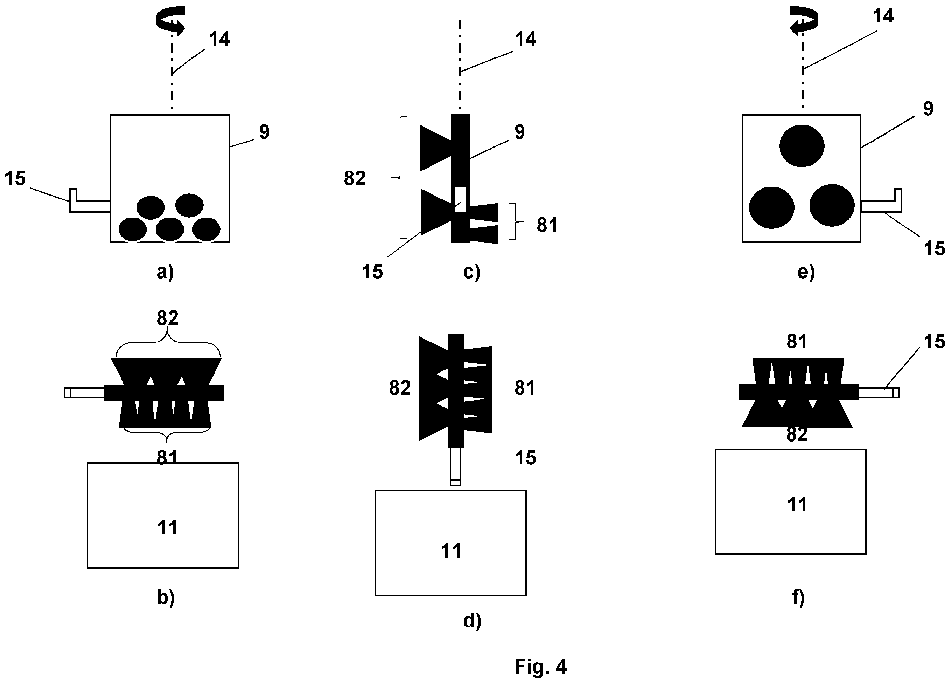

Zudem ist in einer bevorzugten Ausführungsvariante der wenigstens eine Sauggreifer 8 wenigstens in der Arbeitsposition, d.h. zum Zwecke der Kontaktierung, Aufnahme sowie vertikalen Anhebung eines aufzunehmenden Gebindes, um die Vertikalachse rotatorisch frei oder motorisch kontrolliert unterstützt drehbar. Hierzu ist die Halterung 9 an ihrem mit dem Längsabschnitt 2 verbundenen Ende über einen zusätzlichen Drehantrieb verbunden. So bietet nicht jedes Gebinde eine geschlossene, glatte Frontfläche, an der der wenigstens eine Sauggreifer form- und kraftschlüssig gefügt werden kann. Demzufolge ist es auch nicht möglich, alle Gebinde mit nur einem einzigen Sauggreifer handzuhaben. Aus diesem Grunde ist es vorteilhaft, die Sauggreifereinheit, wie vorstehend erläutert, zusätzlich um eine vertikale Rotationsachse R kontrolliert zu drehen. Auf diese Weise eröffnet sich die Möglichkeit die Funktionalität der Sauggreifereinheit erheblich zu verbessern. In den Figuren 4a bis f ist eine um eine Rotationsachse R drehbar angeordnete Sauggreifereinheit 7 illustriert, die an zwei sich gegenüberliegenden Seiten jeweils unterschiedlich ausgebildete und angeordnete sowie unterschiedlich dimensionierte Sauggreifer 8 vorsieht. So sind an der in diesem Fall plattenförmig ausgebildeten Halterung 9, an deren Vorderseite eine erste Sauggreiferanordnung 81, siehe Frontalansicht in Figur 4a, und an deren Rückseite eine zweite Sauggreiferanordnung 82, siehe Frontalansicht gemäß Figur 4e, angeordnet. Zusätzlich ist seitlich an der plattenförmig ausgebildeten Halterung 9 ein Greifmittel 15 in Form eines Hakens angebracht.

In Figur 4b ist eine Draufsicht parallel zur Rotationsachse R bzw. Vertikalachse, dargestellt, bei der die erste Sauggreiferanordnung 81 einem aufzunehmenden Gebinde 11 zugewandt orientiert ist. Durch Rotation der plattenförmigen Halterung 9 um die Rotationsachse R kann in Abhängigkeit von Art und Größe des Gebindes 11 die zweite Sauggreiferanordnung 82 dem jeweils aufzunehmenden Gebinde 11 zugewandt orientiert werden, siehe Figur 4f. In Figur 4d ist eine Drehstellung der plattenförmigen Halterung 9 gezeigt, in der das hakenförmige Greifmittel 15 einem aufzunehmenden Gebinde 11 zugewandt orientiert ist. So können durchaus Fälle auftreten, in denen das Ergreifen und vertikale Anheben eines oder mehrerer Gebinde mit Hilfe eines hakenförmig ausgebildeten Greifmittels 15 die geeignete Wahl der Mittel darstellt. Alternativ oder in Kombination mit dem hakenförmig ausgebildeten Greifmittel 15 können weitere Greifmittelkonturen oder Greifmittel zum reib-, form- und/oder kraftschlüssigen Fügen an ein entsprechend ausgebildetes Gebinde oder einer Pallette an der Halterung 9 angebracht sein.

Figur 4c stellt eine Seitenansicht der plattenförmig ausgebildeten Halterung 9 dar. Der Vollständigkeit halber sei darauf hingewiesen, dass die plattenförmige Halterung 9 mittels der vorstehend erläuterten Linearkinematik 10 bidirektional, im Falle der Arbeitsposition längs der Vertikalachse, auslenkbar ist, um zur Gewichtsentlastung eines aufzunehmenden Gebindes eine Hubbewegung ausführen zu können.

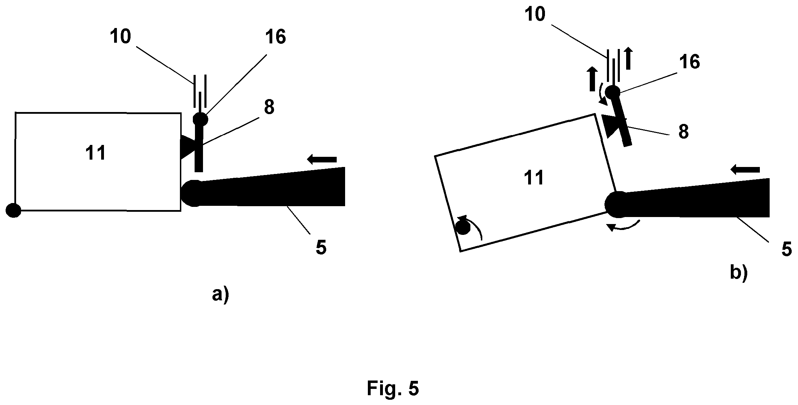

Beim Anheben und Aufnehmen eines Gebindes mit Hilfe der lösungsgemäß ausgebildeten Greifvorrichtung wird das Gebinde 11 in den meisten Fällen um eine hintere Kippkante 14 bzw. Kippachse 14 angekippt, siehe Figur 5a, wodurch sich eine Neigung bzw. Schrägstellung der dem Sauggreifer 8 zugewandt orientierten Gebindeoberfläche ergibt. Dadurch besteht die Gefahr, dass sich der Sauggreifer 8 noch vor Beenden des Anhebevorganges vom Gebinde 11 abtrennt.

Diesem Problem kann einerseits dadurch begegnet werden, dass der wenigstens eine Sauggreifer 8 über eine ausreichend hohe Sauggreiferflexibilität verfügt, um die Neigung des Gebindes während des Ankippens auszugleichen. Eine weitere Möglichkeit zur Begegnung dieses Problems ist in Figur 5a, b illustriert. Die in den Figuren 5a, b illustrierte Ausführungsform sieht zusätzlich ein Ein-Achs-Gelenk 16 vor, durch das der wenigstens eine Sauggreifer 8 während des Ankippens des Gebindes 11, siehe Figur 5b, eine entsprechende Kippbewegung ausführt, so dass die Fügekonstellation zwischen Gebinde 11 und Sauggreifer 8 auch nach Verkippen des Gebindes 11 unverändert bleibt. So wird die durch den Kippvorgang verursachte Schrägstellung der Gebindeoberfläche, an der der wenigstens eine Sauggreifer 8 anhaftet, durch das Ein-Achs-Gelenk 16 kompensiert.

Der wenigstens eine Sauggreifer 8 ist passiv durch die Schwerkraftwirkung oder durch ein nicht dargestelltes Federelement aus der Schrägstellung nach Loslösen vom Gebinde 11 in die vertikale Grundposition rückführbar. Alternativ besteht die Möglichkeit, einen aktiven elektrischen oder pneumatischen Antrieb mit dem Ein-Achs-Gelenk 16 zu kombinieren, so dass der wenigstens eine Sauggreifer 8 gezielt um die dem Ein-Achs-Gelenk 16 zugeordnete Rotationsachse auf einen bestimmten Kippwinkel ausgerichtet werden kann.

Je nach Fallkonstellation und Ausbildung der handzuhabenden Gebinde kann es erforderlich sein, den Abstand und Kontakt des wenigstens einen Sauggreifers 8 zu bzw. mit einem aufzunehmenden Gebinde zu registrieren. Neben der bereits in Verbindung mit der Erläuterung von Figur 1a illustrierten Kontaktsensorik 12 ist die Registrierung eines Kontaktes zwischen Sauggreifer 8 und Gebinde 11 beispielsweise mit einem innerhalb des Sauggreifers 8 integrierten Strömungssensors möglich. Ebenso können am Sauggreifer 8 zusätzlich angeordnete taktile Sensoren einen Erstkontakt mit einem Gebinde 11 erfassen. Grundsätzlich stehen zur Registrierung von Abstand und Kontakt zwischen Sauggreifers 8 und Gebinde alle bekannten Sensortypen zur Verfügung, wie beispielsweise optische Sensoren oder Ultraschallsensoren etc..

Aufgrund der großen Varianz unter den handzuhabenden Gebinden lassen sich folgende typische Fallkonstellationen voneinander unterscheiden:
Im Falle unkritischer, d.h. robuster und eigenstabiler Gebinde ist die Aufnahme ausschließlich mit Hilfe des Aufwälzgreifers unter Verwendung des Aufwälzprinzips möglich. In diesem Fall kann die zusätzlich an der Greifvorrichtung vorgesehene Sauggreifereinheit in der eingangs erläuterten Transportposition (C-Form) verbleiben.

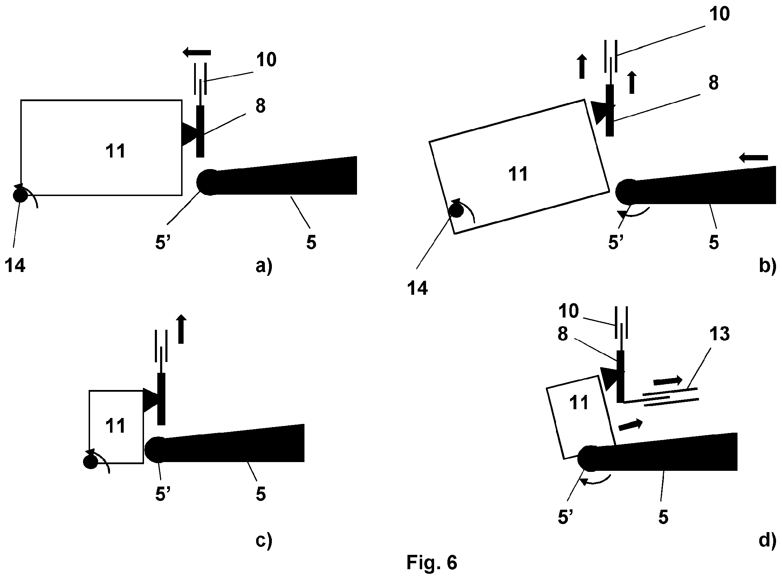

Bei leichten Gebinden, deren Eigenschaften ein alleiniges Aufnehmen mit einem Aufwälzgreifer nicht ermöglichen, ist ein Verfahren zur Aufnahme des Gebindes anwendbar, bei dem das Gebinde vollständig durch den wenigstens einen Sauggreifer vertikal angehoben wird. In diesem Fall bietet es sich an, das aufzunehmende Gebinde 11, siehe Figur 6a, zuerst vom wenigstens einen Sauggreifer 8 zu kontaktieren und zu erfassen, bevor das Wälzelement 5'das Gebinde 11 berührt. Anschließend wird das Gebinde 11 durch den vertikal auslenkbaren Sauggreifer 8 angehoben und in den meisten Fällen gekippt. In dieser, in Figur 6b illustrierten Konstellation beginnt der Aufwälzgreifer 5 das angekippte Gebinde 11 zu unterfahren, um es nachfolgend vollständig aufzunehmen. Eine derartige Vorgehensweise bietet sich insbesondere dann an, wenn die aufzunehmenden Gebinde 11 über eine sehr geringe Eigensteifigkeit verfügen.

Im Falle eines kritischen und sehr schweren Gebindes bietet es sich an, die in Figur 2a, b illustrierte Aufnahmeweise anzuwenden, d.h. das Kontaktieren und Anheben des aufzunehmenden Gebindes 11 erfolgt genau zu jenem Zeitpunkt, zu dem das Wälzelement 5' des Aufwälzgreifers 5 am Gebinde 11 angreift. Wahlweise kann das Gebinde 11 nach dem Anheben lediglich mit dem Aufwälzgreifer 5 unterfahren und aufgezogen werden. Zudem kann der wenigstens eine Sauggreifer 8 so lange in Kontakt mit dem Gebinde 11 bleiben und das Aufziehen des Gebindes 11 auf den Aufwälzgreifer 5 unterstützen, bis das Gebinde 11 sicher auf dem Aufwälzgreifer 5 positioniert ist.

Handelt es sich um besonders kippanfällige Gebinde, d.h. verfügen die Gebinde über eine verhältnismäßig große Gebindehöhe und eine geringe Auflagefläche, so gilt es, den wenigstens einen Sauggreifer 8 in einer möglichst hohen Position am Gebinde 11 Saugkraft-unterstützt angreifen zu lassen, wie dies in Figur 6c dargestellt ist. Der Sauggreifer 8 trägt in diesem Fall wesentlich dazu bei, dass das Gebinde 11 beim Anheben nicht kippt und sicher auf den Aufwälzgreifer 5 überführt werden kann. In einer besonders bevorzugten Ausführungsform bietet es sich überdies an, den wenigstens einen Sauggreifer 8 mit einer zusätzlichen Antriebs-geführten Linearführung 13 zu kombinieren, durch die der Sauggreifer 8 den Vorgang der vollständigen Aufnahme des Gebindes 11 auf den Aufwälzgreifer 5 sicher unterstützend begleitet.

Das allgemein bekannte Aufwälzprinzip beruht darauf, dass das wenigstens eine Wälzelement 5' rotiert, gegen das Gebinde 11 drückt, wodurch das Gebinde 11 aufgrund der vorherrschenden Reibung zwischen Gebinde und Wälzelement 5 angehoben wird. Dies ist allerdings nur möglich, sofern das Gebinde 11 an der zur Aufwälzgreifer 5 abgewandten Seite durch weitere Gebinde 11 oder beispielsweise durch eine Rückwand abgestützt wird. Andernfalls wird das Gebinde 11 vom Aufwälzgreifer 5 in Richtung der Andruckkraft geschoben. Die lösungsgemäße Greifvorrichtung lässt sich in diesem Fall dazu verwenden, das Gebinde 11 aktiv gegen die Greifvorrichtung zu ziehen. Außerdem wird durch das zusätzliche Anheben des Gebindes 11 durch den wenigstens einen vertikal auslenkbaren Sauggreifer 8 die erforderliche Andruckkraft des Aufwälzgreifers gleichzeitig reduziert. Somit ist es möglich, die Aufnahme durch die Greifvorrichtung ohne Abstützung an der Hinterseite eines aufzunehmenden Gebindes 11 für eine Vielzahl von Gebinden zu ermöglichen. Auch in diesem Fall ist der Einsatz der in Figur 6d illustrierten zusätzlichen Linearkinematik 13 von großem Vorteil.

Die lösungsgemäße Greifvorrichtung, die vorzugsweise zu deren räumlichen Positionierung mit einer Roboterkinematik verbunden ist, ermöglicht eine schonende Aufnahme und Handhabung einzelner Gebinde, indem die Andruckkraft des Aufwälzprozesses in Abhängigkeit der Eigenschaften der aufzunehmenden Gebinde reguliert werden kann.

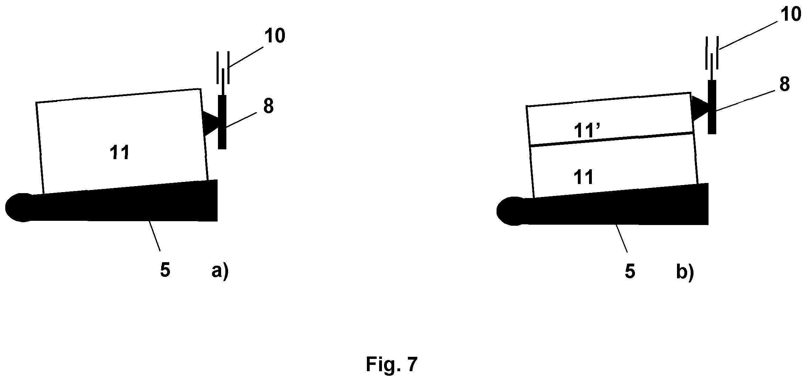

Neben der Hubkraft-Unterstützung bei der Gebindeaufnahme auf den Aufwälzgreifer kann der vertikal auslenkbare Sauggreifer 8 auch dazu genutzt werden, das wenigstens eine auf dem Aufwälzgreifer aufgenommene Gebinde gegen unkontrolliertes Umkippen, beispielsweise verursacht durch von der Positionierrobotereinheit herrührende Beschleunigungen, zu fixieren. Hierzu verbleibt der wenigstens eine Sauggreifer 8 in Kontakt mit dem Gebinde 11, auch nach vollständiger Aufnahme und Auflage auf dem Aufwälzgreifer 5, siehe Figur 7a. Zudem ist es möglich, zwei oder mehrere übereinander gestapelte Gebinde 11, 11' mit der Greifvorrichtung aufzunehmen, indem das jeweils oberste Gebinde 11' durch den wenigstens einen Sauggreifer 8 gestützt und fixiert wird, siehe Figur 7b. Die mit Hilfe des wenigstens einen Sauggreifers 8 mögliche Fixierung hilft insbesondere bei Gebinden 11 mit glatten Oberflächen oder falls kein Form- oder Reibschluss zwischen mehreren Gebinden 11 möglich ist, dass das jeweils oberste Gebinde 11 vom unteren Gebinde nicht abrutschen kann.

Die lösungsgemäße C- bzw. U-Form der Tragstruktur 1 ermöglicht die erweiterte Anbringung weiterer Funktionselemente, um die Multifunktionalität der lösungsgemäßen Greifvorrichtung zu erweitern.

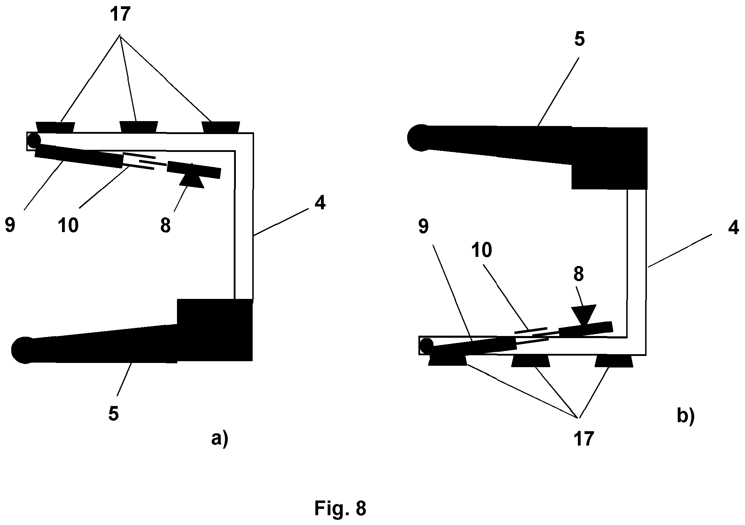

Gilt es beispielsweise sehr flache Objekte, wie beispielsweise flache Kartonagen oder Papiere o.ä. handzuhaben, so stößt die lösungsgemäße Greifvorrichtung an ihre Grenzen. Für die Handhabung derartig flächiger Objekte sieht eine bevorzugte Weiterbildung der lösungsgemäßen Greifvorrichtung wenigstens einen weiteren Sauggreifer 17, vorzugsweise mehrere, als Flächensaug-Modul ausgebildete Sauggreifer 17 vor, siehe Figur 8a, b. Die weiteren Sauggreifer 17 sind an der Oberfläche längs des Längsabschnittes 2 gegenüberliegend zum Aufwälzgreifer 5 verteilt angebracht. Zur Nutzung der als Flächensaug-Modul angebrachten weiteren Sauggreifer 17 wird die lösungsgemäße Greifvorrichtung 1 um 180° um die Horizontalachse mittels einer Manipulatoreinheit gedreht, siehe Figur 8b, so dass die weiteren Sauggreifer 17 vertikal nach unten gerichtet sind. In dieser Konstellation können die Sauggreifer 17 vereinzelt flächige Objekte aufnehmen, beispielsweise stapelförmig übereinander angeordnete Flachkartonagen. In einer besonders bevorzugten Ausführungsvariante können die einzelnen weiteren Sauggreifer 17 hinsichtlich ihres gegenseitigen Abstandes jeweils zur Aufnahme unterschiedlich dimensionierter Flächenobjekte automatisch über Linearaktoren eingestellt werden. Das Ziel des Flächensaug-Moduls ist es, dass sämtliche flächige Objekte bis hin zu dünnen Kartonagen oder Papiere mit der Greifvorrichtung handhabbar sind.

Der Einsatz eines zusätzlichen Flächensaug-Moduls ermöglicht es sequentiell mehrere Objekte mit der Greifvorrichtung aufzunehmen. Wenn das Flächensaug-Modul beispielsweise, wie in Abbildung 8a, über dem Aufwälzgreifer 5 angebracht ist, kann die Greifvorrichtung zuerst ein flächiges Objekt mit dem Flächensaug-Modul und anschließend weitere Gebinde mit dem Aufwälzgreifer 5 in Verbindung mit dem vertikal auslenkbaren Sauggreifer 8 aufnehmen. Diese Speicherung von Gebinden und flächigen Objekten 11 erweitert das Spektrum der möglichen Abfolgen während eines Kommissionier-Prozesses.

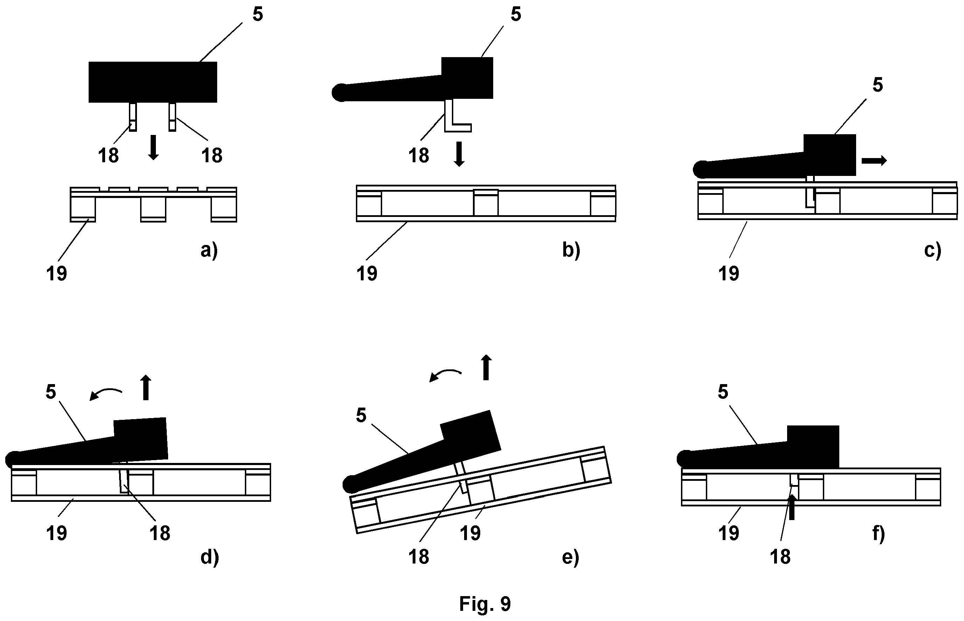

Eine weitere Ausführungsform der lösungsgemäßen Greifvorrichtung sieht unterhalb des Aufwälzgreifers 5 wenigstens ein, vorzugsweise zwei weitere Greifmittel in Form von Haken 18 vor, die der Aufnahme, Handhabung und einem kontrollierten Absetzen von Paletten dienen, siehe Figuren 9a bis f, die Sequenzbilddarstellungen zur Aufnahme einer Palette 19 zeigen.

Das dem Aufnahmevorgang zugrunde liegende Prinzip beruht darauf, die an der Unterseite des Aufwälzgreifers 5 angebrachten Haken 18 durch die Lücken der Palette 19 hindurchzuführen, siehe Figur 9 a, b und durch eine anschließende horizontale Bewegung der Greifvorrichtung die Haken 18 in den Querbrettern der Palette 19 einzuhaken, siehe Figur 9c. Die Unterseite des Aufwälzgreifers 5 wird beim Anheben als Gegenhalter für die Palette 19 verwendet, siehe Figur 9d.

Grundsätzlich bestehen zwei Varianten, die Greifvorrichtung bzw. die Unterseite des Aufwälzgreifers 5 als Gegenhalter zu verwenden. Einerseits ist es möglich nach Durchfädeln der Haken 18 durch die Palette 19 und Ergreifen der Querbretter mittels Formschluss die Palette 19 durch Ankippen gegen die Unterseite des Aufwälzgreifers 5 mechanisch stabil zu halten. Andererseits kann die Palette 19 durch die Haken 18 aktiv gegen die Unterseite des Aufwälzgreifers 5 gepresst werden, wie dies in Figur 9f gezeigt ist. Die Haken 18 sind dazu mit einem elektrischen oder pneumatischen linearen Antrieb an der Greifvorrichtung anzubringen, der die Bewegung der Haken 18 in vertikaler Richtung relativ zur Unterseite des Aufwälzgreifers 5 ermöglicht. Über die Haken 18 entsteht somit ein Form- sowie auch Kraftschluss zwischen Palette 19 und der Unterseite des Aufwälzgreifers 5.

In Erweiterung der Greifvorrichtung können die Haken 18 linear oder rotatorisch an der Greifvorrichtung gelagert sein, so dass die Haken 18 durch einen linearen oder rotatorischen elektrischen oder pneumatischen Aktor in eine bestimmte Transportstellung überführbar sind. Dadurch wird eine mögliche Störkontur, die ansonsten an der Greifvorrichtung auftreten würde, beim Greifen von Gebinden verhindert.

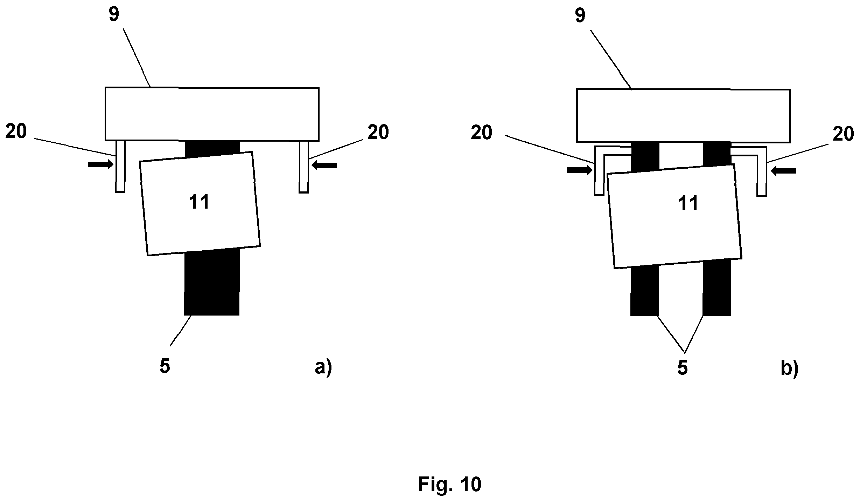

Beim Aufnehmen von Gebinden kommt es vor, dass diese leicht versetzt oder verdreht auf dem Aufwälzgreifer 5 aufgenommen werden. Der Versatz oder die Verdrehung lässt sich mit Hilfe von einer sogenannten Zentrier-Vorrichtung ausgleichen, die in den Figuren 10a, b illustriert ist. Die Zentrier-Vorrichtung weist vorzugsweise zwei Klemmbacken 20 auf.

Im Falle der in Figur 10a illustrierten Greifvorrichtung, die lediglich über einen Aufwälzgreifer 5 verfügt, sind die beiden Klemmbacken 20 an der Halterung 9 und überdies synchron zueinander bewegbar angeordnet. Dadurch kann ein auf den Aufwälzgreifer 5 geschobenes Gebinde 11 in Abhängigkeit der Gebindebreite von beiden Klemmbacken 20 seitlich ergriffen und mittig rechtwinklig zur Ausrichtung des Aufwälzgreifers 5 ausgerichtet werden. Beide Klemmbacken 20 werden in diesem Fall von einem elektromotorischen oder pneumatischen Antrieb synchron zueinander ausgelenkt.

Im Falle der Figur 10b sieht die Greifvorrichtung zwei parallel zueinander orientierte Aufwälzgreifer 5 vor, deren gegenseitiger Abstand zueinander variierbar ist. In diesem Fall bietet sich die Möglichkeit an, die Klemmbacken 20 passiv auszugestalten und jeweils direkt seitlich an jeweils einem Aufwälzgreifer 5 anzubringen. Allerdings können auch in diesem Fall die Klemmbacken 20 jeweils motorisch angetrieben seitlich ausgelenkt werden. Zur Vermeidung von überhöhten Andruckkräften, die die Klemmbacken 20 auf einem auf dem Aufwälzgreifer 5 aufliegenden Gebinde 11 ausüben können, sind vorzugsweise optische oder taktile Ultraschallsensoren o.ä. zusätzlich verbaut, um die Position und den Kontakt zwischen einem Gebinde und den Klemmbacken 20 zu erfassen. Dadurch lässt sich der Prozess gezielt steuern, beispielsweise ist es somit möglich, auf Anomalien des jeweiligen Gebindes 11 reagieren zu können.

### Bezugszeichenliste

- 1: Tragstruktur
- 2, 3: Längsabschnitt
- 2', 3': freies Ende des Längsabschnittes
- 4: Verbindungsabschnitt
- 5: Aufwälzgreifer
- 5': Wälzelement
- 6: Drehachse
- 7: Sauggreifereinheit
- 8: Sauggreifer
- 9: Halter
- 10: Linearkinematik
- 11, 11': Gebinde
- 12: Kontaktsensorik
- 13: Linearkinematik
- 14: Rotationsachse
- 15: Greifmittel, Haken
- 16: Ein-Achs-Gelenk
- 17: weiterer Sauggreifer
- 18: Haken
- 19: Palette
- 20: Klemmbacken
- R: Rotationsachse

## Patentansprüche

1. Greifvorrichtung mit wenigstens einem Aufwälzgreifer (5) sowie einer Sauggreifereinheit (7) zum Kommissionieren von Gebinden (11, 11),
**dadurch gekennzeichnet, dass** der wenigstens eine Aufwälzgreifer (5) Teil einer C- oder U-förmig ausgebildeten Tragstruktur (1) ist, die zwei sich beabstandet gegenüberliegende Längsabschnitte (2, 3) vorsieht, die jeweils endseitig frei enden und gegenüberliegend zu den freien Enden (2', 3') über einen Verbindungsabschnitt (4) miteinander verbunden sind,
dass der wenigstens eine Aufwälzgreifer (5) einem der beiden Längsabschnitte (2, 3) entspricht und an seinem freien Ende (2', 3') wenigstens ein drehbar angetriebenes Wälzelement (5') vorsieht,
dass die Sauggreifereinheit (7), die wenigstens einen Sauggreifer (8) vorsieht, an der Tragstruktur (1) angelenkt ist und aus einer ersten Position, in der der Sauggreifer (8) zur Aufnahme eines Gebindes (11, 11') auf den Aufwälzgreifer (5) vertikal über dem Wälzelement (5') angeordnet ist, in eine zweite Position überführbar ist, in der der Sauggreifer (8) gegenüberliegend zum Aufwälzgreifer (5) längs verlaufend zum Längsabschnitt (2, 3) oder gegenüberliegend zu beiden freien Enden (2', 3') längsverlaufend zum Verbindungsabschnitt (4) angeordnet ist, und
dass der wenigstens eine Sauggreifer (8) der Sauggreifereinheit (7) mittel- oder unmittelbar mit einer Linearkinematik (10) verbunden ist, die den wenigstens einen Sauggreifer (8) in der ersten Position vertikal auszulenken vermag.

2. Greifvorrichtung nach Anspruch 1,
**dadurch gekennzeichnet, dass** die Linearkinematik (10) längs des Verbindungsabschnittes (4) derart angeordnet ist, dass der dem Aufwälzgreifer (5) gegenüberliegende Längsabschnitt und der Aufwälzgreifer (5) bei Betätigung der Linearkinematik (10) bidirektional relativ zueinander auslenkbar sind.

3. Greifvorrichtung nach Anspruch 1 oder 2,
**dadurch gekennzeichnet, dass** der wenigstens eine Sauggreifer (8) am freien Ende des dem Aufwälzgreifer (5) gegenüberliegenden Längsabschnittes (2) um eine Drehachse (6) mittels eines Antriebes schwenkbar oder längs des dem Aufwälzgreifer (5) gegenüberliegenden Längsabschnittes mittels eines Antriebes bidirektional verfahrbar oder der dem Aufwälzgreifer (5) gegenüberliegende Längsabschnitt mittels eines Antriebes bidirektional verfahrbar angeordnet ist.

4. Greifvorrichtung nach Anspruch 3,
**dadurch gekennzeichnet, dass** der Antrieb ein elektromotorischer oder pneumatischer Antrieb ist, der in Form eines Drehantriebes in der Drehachse (6) am freien Ende des Längsabschnittes ist oder in Form eines Linearantriebes an der Tragstruktur (1) angeordnet ist.

5. Greifvorrichtung nach einem der Ansprüche 1 bis 3,
**dadurch gekennzeichnet, dass** der wenigstens eine Sauggreifer (8) in der ersten Position um eine Vertikalachse drehbar gelagert ist.

6. Greifvorrichtung nach einem der Ansprüche 1, 3 bis 5,
**dadurch gekennzeichnet, dass** eine Halterung (9) vorgesehen ist, an der die Linearkinematik (10) und der wenigstens eine Sauggreifer (8) derart angebracht sind, dass die Linearkinematik (10) den wenigstens einen Sauggreifer (8) relativ zur Halterung (9) bidirektional auzulenken vermag, und
dass die Halterung (9) an der Tragstruktur (1) drehbeweglich oder linearbeweglich verbunden ist.

7. Greifvorrichtung nach Anspruch 5 und 6,
**dadurch gekennzeichnet, dass** an der Halterung (9) wenigstens zwei vermittels der Linearkinematik (10) bidirektional auslenkbare Sauggreifer (8) angebracht sind, deren zuordenbare Saugwirkrichtungen voneinander abgewandt orientiert sind.

8. Greifvorrichtung nach Anspruch 6 oder 7,
**dadurch gekennzeichnet, dass** an der Halterung (9) wenigstens eine Fügekontur angeordnet ist, die einen Form- und/oder Kraftschluss zu einem Gebinde (11, 11') oder einer Gebindeumfassung ermöglicht.

9. Greifvorrichtung nach einem der Ansprüche 6 bis 8,
**dadurch gekennzeichnet, dass** die Linearkinematik (10) samt des wenigstens einen Sauggreifers (8) über ein Ein-Achs-Gelenk (16) an der Halterung (9) schwenkbeweglich angebracht ist.

10. Greifvorrichtung nach Anspruch 9,
**dadurch gekennzeichnet, dass** das Ein-Achs-Gelenk (16) motorisch antreibbar ist.

11. Greifvorrichtung nach einem der Ansprüche 1 bis 10,
**dadurch gekennzeichnet, dass** an der Sauggreifereinheit (7) eine Kontaktsensorik (12) zur Erfassung eines Kontaktes zwischen einem Gebinde (11, 11') und dem wenigstens einen Sauggreifer (8) angebracht ist.

12. Greifvorrichtung nach einem der Ansprüche 1 bis 11,
**dadurch gekennzeichnet, dass** an dem, dem wenigstens einen Aufwälzgreifer (5) gegenüberliegenden Längsabschnitt (2) der Tragstruktur (1) an einer dem Aufwälzgreifer (5) abgewandten Oberfläche des Längsabschnittes wenigstens ein weitere Sauggreifer (17) angeordnet ist.

13. Greifvorrichtung nach einem der Ansprüche 1 bis 12,
**dadurch gekennzeichnet, dass** am Aufwälzgreifer (5) und/oder an dem, dem Aufwälzgreifer (5) gegenüberliegenden Längsabschnitt ein Greifmittel (15) derart angeordnet ist, so dass das Greifmittel (15) abgewandt von einem durch die C- oder U-förmig ausgebildete Tragstruktur (1) umfassten Raumbereich in Eingriff mit einem aufzunehmenden Gegenstand, insbesondere mit einer Palette (19), bringbar ist.

14. Greifvorrichtung nach einem der Ansprüche 6 bis 12,
**dadurch gekennzeichnet, dass** an der Halterung (9) und/oder an dem wenigstens einen Aufwälzgreifer (5) eine Zentrierhilfe für eine mittige Aufnahme eines Gebindes (11, 11') auf den wenigstens einen Aufwälzgreifer (5) angebracht ist, und
dass die Zentrierhilfe zwei linear beweglich ausgebildete Klemmbacken (20) vorsieht.

15. Greifvorrichtung nach einem der Ansprüche 1 bis 14,
**dadurch gekennzeichnet, dass** mittel- oder unmittelbar an der Tragsstruktur (1) eine Greifereinheit zur Lage-stabilisierenden Kontaktierung eines auf dem Aufwälzgreifer (5) abgeordneten Gebindes (11, 11') angebracht ist.

16. Greifvorrichtung nach einem der Ansprüche 1 bis 15,
**dadurch gekennzeichnet, dass** der wenigstens eine Sauggreifer (8) querverlaufend zu dem, dem Aufwälzgreifer (5) gegenüberliegenden Längsabschnitt (2) bidirektional verfahrbar angeordnet ist.

17. Manipulatoreinheit mit einer Greifvorrichtung nach einem der Ansprüche 1 bis 16, die zur räumlichen Positionierung der Greifvorrichtung im Bereich des Verbindungsabschnittes (4), rückwärtig zu einem von der C- oder U-förmig ausgebildeten Tragstruktur (1) umfassten Raumbereich, mit der Greifvorrichtung verbunden ist.

## Claims

1. Gripping device with at least one roll-on gripper (5) and a suction gripper unit (7) for picking containers (11, 11'),
**characterized in that** the at least one roll-on gripper (5) is part of a C-shaped or U-shaped support structure (1) which provides two separately located mutually facing longitudinal sections (2, 3) which each end free at the ends and are connected to one another opposite the free ends (2', 3') via a connecting section (4)
that the at least one roll-on gripper (5) corresponds to one of the two longitudinal sections (2, 3) and provides at least one rotatably driven rolling element (5') at its free end (2', 3'),
that the suction gripper unit (7), which provides at least one suction gripper (8), is attached to the support structure (1) in hinged manner and is arranged such that it can be transferred from a first position in which the suction gripper (8) is arranged vertically above the rolling element (5') for picking up a container (11, 11') onto the roll-on gripper (5), to a second position in which the suction gripper (8) is arranged opposite the roll-on gripper (5), extending longitudinally to the longitudinal section (2, 3) or opposite the two free ends (2', 3'), extending longitudinally to the connecting section (4), and
that the at least one suction gripper (8) of the suction gripper unit (7) is directly or indirectly connected to a linear kinematic system (10) which is able to vertically deflect the at least one suction gripper (8) in the first position.

2. Gripping device according to Claim 1, **characterized in that** the linear kinematic system (10) is arranged along the connecting section (4) in such a way that the longitudinal section opposite the roll-on gripper (5) and the roll-on gripper (5) can be deflected bidirectionally relative to one another when the linear kinematic system (10) is actuated.

3. Gripping device according to Claim 1 or 2, **characterized in that** the at least one suction gripper (8) on the free end of the longitudinal section (2) opposite the roll-on gripper (5) is arranged so as to be pivotable about and axis of rotation (6) by means of a drive, or displaceable bidirectionally along the longitudinal section opposite the roll-on gripper (5) by means of a drive, or the longitudinal section opposite the rolling gripper (5) is displaceable bidirectionally by means of a drive.

4. Gripping device according to Claim 3, **characterized in that** the drive is an electromotor or pneumatic drive, which is arranged on the free end of the longitudinal section in the form of a rotary drive in the axis of rotation (6), or on the support structure (1) in the form of a linear drive.

5. Gripping device according to any one of Claims 1 to 3, **characterized in that** in the first position the at least one suction gripper (8) is mounted rotatably about a vertical axis.

6. Gripping device according to any one of Claims 1, 3 to 5, **characterized in that** a holder (9) is provided, to which the linear kinematic system (10) and the at least one suction gripper (8) are attached in such a way that the linear kinematic system (10) is able to deflect the at least one suction gripper (8) bidirectionally relative to the holder (9), and that the holder (9) is connected to the support structure (1) is such manner that it can rotate or move linearly.

7. Gripping device according to Claim 5 and 6, **characterized in that** at least two suction grippers (8) that are deflectable by means of the linear kinematic system (10), the assignable suction directions of which are orientated away from each other, are attached to a holder (9).

8. Gripping device according to Claim 6 or 7, **characterized in that** at least one joining contour is arranged on the holder (9) and enables a positive and/or frictional connection to a container (11, 11') or container enclosure.

9. Gripping device according to any one of Claims 6 to 8, **characterized in that** the linear kinematic system (10) together with the at least one suction gripper (8) is attached pivotably to the holder (9) via a single-axis joint (16).

10. Gripping device according to Claim 9, **characterized in that** the single-axis joint (16) can be driven by a motor.

11. Gripping device according to any one of Claims 1 to 10, **characterized in that** a contact sensor means (12) is attached to the suction gripper unit (7) for detecting a contact between a container (11, 11') and the at least one suction gripper (8).

12. Gripping device according to any one of Claims 1 to 11, **characterized in that** at least one further suction gripper (17) is arranged on a surface of the longitudinal section facing away from the rolling gripper (5) on the longitudinal section (2) of the support structure (1) opposite the at least one roll-on gripper (5).

13. Gripping device according to any one of Claims 1 to 12, **characterized in that** a gripping means (15) is arranged on the roll-on gripper (5) and/or on the longitudinal section opposite the roll-on gripper (5) in such manner that the gripping means (15) facing away from a spatial area encompassed by the C-shaped or U-shaped support structure (1) can be brought into engagement with an object to be picked up, in particular with a pallet (19).

14. Gripping device according to any one of Claims 6 to 12, **characterized in that** a centring aid is attached to the holder (9) and/or the at least one roll-on gripper (5) for picking up a container (11, 11') in the middle onto the at least one roll-on gripper (5), and that the centring aid provides two linearly movable clamping jaws (20).

15. Gripping device according to any one of Claims 1 to 14, **characterized in that** a gripper unit is attached directly or indirectly to the support structure (1) for contacting a container (11, 11') transferred to the roll-on gripper (5) in position-stabilising manner.

16. Gripping device according to any one of Claims 1 to 15, **characterized in that** the at least one suction gripper (8) is arranged to be bidirectionally displaceable transversely to the longitudinal section (2) opposite the roll-on gripper (5).

17. Manipulator unit with a gripping device according to any one of Claims 1 to 16, which is connected at the rear of a spatial area encompassed by the C-shaped or U-shaped support structure (1) with the gripping device for the spatial positioning of the gripping device in the region of the connecting section (4).

## Revendications

1. Dispositif de préhension avec au moins un préhenseur à roulement (5) ainsi qu'une unité de préhenseur à succion (7) pour réceptionner des conditionnements (11, 11'),
**caractérisé en ce qu'**au moins un préhenseur à roulement (5) fait partie d'une structure portante (1) constituée en forme de C ou de U, qui prévoit deux sections longitudinales (2, 3) opposées à distance, les extrémités libres en bout et opposées aux extrémités libres (2', 3') sont respectivement reliées entre elles par une section de liaison (4),
**en ce qu'**au moins un préhenseur à roulement (5) correspond à une des deux sections longitudinales (2, 3) et prévoit à son extrémité libre (2', 3') au moins un élément de roulement entraîné pouvant tourner (5'),
**en ce que** l'unité de préhenseur à succion (7), qui prévoit un préhenseur à succion (8) est reliée en articulation à la structure portante (1) et peut être transférée d'une première position dans laquelle le préhenseur à succion (8) pour réception d'un conditionnement (11, 11') est disposé verticalement par l'élément à roulement (5') sur le préhenseur à roulement (5), dans une deuxième position, dans laquelle le préhenseur à succion (8) est disposé en opposition au préhenseur à roulement (5) passant le long de la section longitudinale (2, 3) ou en opposition aux deux extrémités (2', 3') passant longitudinalement à la section de liaison (4), et
**en ce qu'**au moins un préhenseur à succion (8) de l'unité de préhenseur à succion (7) est reliée directement ou indirectement à une cinématique linéaire (10), qui peut orienter verticalement au moins un préhenseur à succion (8) dans la première position.

2. Dispositif de préhension selon la revendication 1, **caractérisé en ce que** la cinématique linéaire (10) est disposée le long de la section de liaison (4) de telle manière que la section longitudinale opposée au préhenseur à roulement (5) et le préhenseur à roulement (5) peuvent être orientés de façon bidirectionnelle l'un par rapport à l'autre lors de l'actionnement de la cinématique linéaire (10).

3. Dispositif de préhension selon la revendication 1 ou 2, **caractérisé en ce qu'**au moins un préhenseur à succion (8) peut pivoter à l'extrémité libre de la section longitudinale (2) opposée au préhenseur à roulement (5) autour d'un axe de rotation (6) au moyen d'un système d'entraînement ou être déplacé de façon bidirectionnelle le long de la section longitudinale opposée au préhenseur à roulement (5) au moyen d'un système d'entraînement ou la section longitudinale opposée au préhenseur à roulement (5) est disposée pouvant être déplacée de façon bidirectionnelle au moyen d'un système d'entraînement.

4. Dispositif de préhension selon la revendication 3, **caractérisé en ce que** le système d'entraînement est un entraînement à moteur électrique ou pneumatique, qui est sous la forme d'un entraînement rotatif dans l'axe de rotation (6) à l'extrémité libre de la section longitudinale ou est disposé sous la forme d'un entraînement linéaire sur la structure portante (1).

5. Dispositif de préhension selon l'une quelconque des revendications 1 à 3, **caractérisé en ce qu'**au moins un préhenseur à succion (8) est logé pouvant tourner dans la première position autour d'un axe vertical.

6. Dispositif de préhension selon l'une quelconque des revendications 1, 3 à 5, **caractérisé en ce qu'**un support (9) est prévu sur lequel sont montés la cinématique linéaire (10) et au moins un préhenseur à succion (8) de telle manière que la cinématique linéaire (10) peut orienter de façon bidirectionnelle au moins un préhenseur à succion (8) par rapport au support (9), et **en ce que** le support (9) est relié mobile en rotation ou mobile de façon linéaire à la structure portante (1).

7. Dispositif de préhension selon les revendications 5 et 6, **caractérisé en ce qu'**au moins deux préhenseur à succion (8) orientables de façon bidirectionnelle au moyen de la cinématique linéaire (10) sont montés sur le support (9), dont les directions fonctionnelles d'aspiration attribuables sont orientées éloignées l'une de l'autre.

8. Dispositif de préhension selon la revendication 6 ou 7, **caractérisé en ce qu'**au moins un profil de joint est disposé sur le support (9), qui permet une conformité de forme et/ou de force avec le conditionnement (11, 11') ou un pourtour de conditionnement.

9. Dispositif de préhension selon l'une quelconque des revendications 6 à 8, **caractérisé en ce que** la cinématique linéaire (10) avec au moins un préhenseur à succion (8) est placée mobile en pivotement sur le support (9) par le biais d'une articulation monoaxiale (16).

10. Dispositif de préhension selon la revendication 9, **caractérisé en ce que** l'articulation monoaxiale (16) peut être entraînée de façon motorisée.

11. Dispositif de préhension selon l'une quelconque des revendications 1 à 10, **caractérisé en ce qu'**un système de détection à contact (12) pour la saisie d'un contact est placé entre un conditionnement (11, 11') et au moins un préhenseur à succion (8) sur l'unité de préhenseur à succion (7).

12. Dispositif de préhension selon l'une quelconque des revendications 1 à 11, **caractérisé en ce qu'**au moins un autre préhenseur à succion (17) est disposé sur la section longitudinale (2) de la structure portante (1), opposée au moins à un préhenseur à roulement (5) sur une surface éloignée du préhenseur à roulement (5) de la section longitudinale.

13. Dispositif de préhension selon l'une quelconque des revendications 1 à 12, **caractérisé en ce qu'**un moyen de préhension (15) est disposé sur le préhenseur à roulement (5) et/ou sur la section longitudinale opposée au préhenseur à roulement (5) de telle manière que le moyen de préhension (15) peut être mis en prise avec un objet à recevoir, en particulier avec une palette (19), éloigné d'une zone d'espace entourée par une structure portante (1) constituée en forme de C ou de U.

14. Dispositif de préhension selon l'une quelconque des revendications 6 à 12, **caractérisé en ce qu'**une assistance de centrage pour une réception centrale d'un conditionnement (11, 11') est placée sur au moins un préhenseur à roulement (5), sur le support (9) et/ou sur au moins un préhenseur à roulement (5) et **en ce que** l'assistance de centrage prévoie deux mâchoires de serrage (20) constituées linéairement mobiles.

15. Dispositif de préhension selon l'une quelconque des revendications 1 à 14, **caractérisé en ce qu'**une unité de préhension est placée directement ou indirectement sur la structure portante (1) pour la mise en contact stabilisant la position d'un conditionnement (11, 11') détaché sur le préhenseur à roulement (5).

16. Dispositif de préhension selon l'une quelconque des revendications 1 à 15, **caractérisé en ce qu'**au moins un préhenseur à succion (8) est disposé pouvant être déplacé de façon bidirectionnelle passant transversalement à la section longitudinale (2) opposée au préhenseur à roulement (5).

17. Unité de manipulation avec un dispositif de préhension selon l'une quelconque des revendications 1 à 16, qui est reliée au dispositif de préhension, à l'arrière à une zone d'espace entourée par la structure portante (1) constituée par en forme de C ou de U, pour le positionnement dans l'espace du dispositif de préhension dans la zone de la section de liaison (4).
